# EUROPEAN PATENT SPECIFICATION

(11) **EP 3 732 421 B1**
(45) Date of publication and mention of the grant of the patent: **23.08.2023**
(21) Application number: 18834250.5
(22) Date of filing: 21.12.2018
(51) Int. Cl.: F28D 20/02, C09K 5/06, D07B 1/06, F28F 21/06, H01B 3/30

(54) **COMPOSITION AND METHODS FOR A HEAT STORAGE CAPACITY DEVICE FOR THERMAL MANAGEMENT OF FLUIDS**
ZUSAMMENSETZUNG UND VERFAHREN FÜR EINE WÄRMESPEICHERKAPAZITÄTSVORRICHTUNG ZUR WÄRMEVERWALTUNG VON FLUIDEN
COMPOSITION ET PROCÉDÉS POUR UN DISPOSITIF À CAPACITÉ DE STOCKAGE THERMIQUE POUR LA GESTION THERMIQUE DE FLUIDES

(30) Priority: 29.12.2017 US 201762611573 P
(43) Date of publication of application: 04.11.2020
(73) Proprietor: DUPONT POLYMERS, INC., Wilmington DE 19805 (US)
(72) Inventor: ROLLAND, Loic Pierre, 01220 Divonne Les Bains (FR)
(74) Representative: Heinemann, Monica
(86) International application number: PCT/US2018/067010
(87) International publication number: WO 2019/133461

(56) References cited:
- WO-A1-94/09331
- WO-A1-99/00454
- WO-A1-2017/079018
- WO-A1-2017/214398
- FR-A1- 3 032 028
- JP-A- 2011 038 760
- US-A1- 2017 045 301

## Description

### BACKGROUND OF THE INVENTION

The present invention relates to design, compositions and manufacturing methods for a heat storage capacity device including a phase change material (PCM) for thermal management in different applications such as automotive and building. In particular, the present invention relates to devices having a phase change material, the process of making thereof and their use in applications such as automotive.

Phase change materials (PCM) are latent thermal storage materials that are capable of absorbing and releasing high amounts of latent heat during melting and crystallization, respectively. The thermal energy transfer occurs when a material is transformed from a solid to a liquid phase or from a liquid to a solid phase. During such phase changes, the temperature of the PCM material remains nearly constant as does the space surrounding the PCM material, the heat flowing through the PCM being "entrapped" within the PCM itself. Among well- known PCMs, paraffin is frequently used because of its low cost and low toxicity. In order to conveniently use the PCM in thermal management applications, systems including short pieces of cable comprising a PCM core encapsulated in one or more polymer outer layers have been used.

However, such existing thermal management systems can be expensive to manufacture and can lack reliability because of their design and the multiple steps required for their manufacture. In the case of systems comprising short pieces of cable including a PCM, different techniques have been tried to close the cable ends. However, existing systems have deficiencies including lack of reliability and high manufacturing costs. Closing materials used are often too costly, heavy and labor intensive to put in place; thermoset resins take hours to cure and therefore cannot be used for industrial usage. Welding or plastic closings are also not 100 % reliable (risk of leakage) and are labor intensive to put in place. Although adhesives would be a cost effective solution, at this stage they are also not 100 % reliable.

There is still a need for cost effective and reliable PCM containing devices that provide high heat storage capacity, high surface contact for optimum thermal exchange, that may be resistant to temperatures from -20°C to 130°C under permanent exposure to air but also to chemicals, in particular to lubricating oil and/or to cooling fluids, that may remain efficient with time and that may provide high thermal conductivity. FR 3 032 028 A1 disclose a heat storage capacity device according to the preamble of claim 1.

### SUMMARY OF THE INVENTION

This aim has been achieved by the design of the heat storage capacity device of the present invention wherein one cable is coiled around a PCM containing body. This design eliminates the need to have many small cable parts fixed between two metal or plastic plates which are not cost effective in regard to manufacture or efficient in regard to heat storage capacity (too high weight of closings vs. content of PCM in the system) or reliable in regard to risk of leakage (many closings with high risk of liability).

In a first embodiment the invention is directed to a heat storage capacity device according to claim 1 having at least one body comprising an encapsulation made of one or more polymer layers defining a hollowed volume filled with PCM and at least one coaxial device surrounding the entire length of the at least one PCM filled body.

In another embodiment, the invention is directed to a method of making a heat storage capacity device according to claim 8 including the steps of preparing an inner and outer polymer encapsulation layer defining a hollowed section filled with PCM, and wrapping the entire length of the outer encapsulation layer comprising at least one hollowed section filled with PCM with at least one coaxial device.

Also disclosed herein is the use of the heat storage capacity device of the present invention in thermal management, in particular in automotive.

### BRIEF DESCRIPTION OF THE DRAWINGS

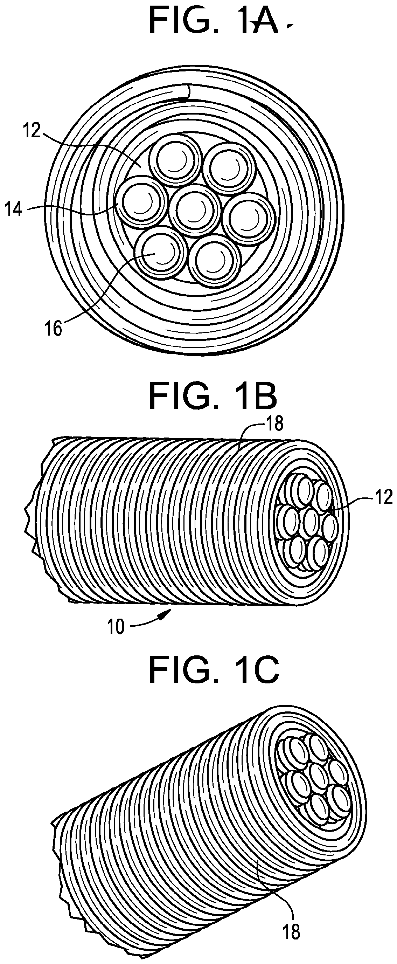

FIG. 1A illustrates a side view of the heat storage capacity device of the present invention;
FIG. 1B illustrates a side perspective view of the heat storage capacity device of the present invention;
FIG. 1C illustrates a side lower perspective view of the heat storage capacity device of the present invention;
FIG. 2A illustrates a latent heat battery including the present invention; and
FIG. 2b illustrates a latent heat battery of the existing art.

### DETAILED DESCRIPTION

### Definitions

As used herein, the term "a" refers to one as well as to at least one and is not an article that necessarily limits its referent noun to the singular.

As used herein, the terms "about" and "at or about" are intended to mean that the amount or value in question may be the value designated or some other value about the same. The phrase is intended to convey that similar values promote equivalent results or effects according to the invention.

As used herein, the term "acrylate" means an ester of acrylic acid with an alkyl group. Preferred in the invention are acrylates with alkyl groups having 1 to 4 carbon atoms.

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising ethylene and 18 weight percent of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such. The term "copolymer" may refer to polymers that consist essentially of copolymerized units of two different monomers (a dipolymer), or that consist essentially of more than two different monomers (a terpolymer consisting essentially of three different comonomers, a tetrapolymer consisting essentially of four different comonomers, etc.).

The term "ionomer" refers to a polymer that is produced by partially or fully neutralizing an acid copolymer as described above.

Referring to FIG.s 1A, 1B and 1C, in a first embodiment, the invention is directed to a heat storage capacity device 10 having at least one body 12 having an encapsulation 14 made of one or more polymer layers defining a hollowed volume filled with a PCM liquid 16 and a coaxial device 18 surrounding the entire length of the at least one PCM filled body 12 . with PCM composition in liquid form 16. The PCM composition 16 can have any melting point from -50°C to 150°C.

The body 12 is made of one or more polymer encapsulation layers 14 made of polyamide, a blend of ionomer and polyamide, ethylene acrylate rubber, polyethylene, ethylene copolymers, polypropylene, polyester, all fluorinated polymers including perfluoro ethylene-propylene, perfluoroalkoxy alkane, ethylene tetrafluoroethylene, FKM fluoroelastomers as defined in ASTM D1418, Polyvinylidene fluoride, aluminum and combinations of two or more thereof, defining the hollowed volume filled with PCM 16.

The heat storage capacity device 10 has a continuous coaxial device 18 made of one or more polymer layers made of polyamide, a blend of ionomer and polyamide, ethylene acrylate rubber, polyethylene, ethylene copolymers, polypropylene, polyester, all fluorinated polymers including perfluoro ethylene-propylene, perfluoroalkoxy alkane, ethylene tetrafluoroethylene, FKM fluoroelastomers as defined in ASTM D1418, Polyvinylidene fluoride, and combinations of two or more thereof, defining the hollowed area filled with PCM 16.

In the present embodiment, the coaxial device 18 is continuous consisting of a first end with a second end wherein the continuous coaxial device is in the form of a cable. However, one skilled in the art would recognize that the coaxial device could be take other forms without departing from the concept of the invention. More specifically, the coaxial device surrounding the body 12 could be in the form of a sold sheet, a squared profile or a rectangular profile. Further, it is within the scope of the invention to have multiple segments of cable or sheets surrounding the body 12, each having a first end and second end, if necessary.

The ability to have a continuous uninterupted device reduces manufacturing costs and is more efficient in regard to heat storage capacity; lower weight of closings vs. content of PCM in the system. For example, in a specific volume, having multiple closings results in less space for the cable itself and consequently there is less PCM for thermal performance of the whole device. Further, the ability to have a continuous uninterrupted device is more reliable in regard to risk of leakage; the higher the number of closings, the higher the risk of leaks and therefore of liability.

The continuous coaxial device 18 in the form of a cable can have a diameter of between 2 and 8 mm and a total encapsulation thickness between 0.1 and 0.5 mm. This range ensures elimination of the "kinking" which would negatively effect the long term effeciency of the device (risk of leakage at the kinks). Further, this range is complementary to the diameter of the body 12 containing the PCM. If the diameter of the continuous coaxial is too large, it will tend to kink when being coiled around the body 12. The kinks are then source of potential breakage of the encapsulation i.e. leading to leakage of the PCM).

The at least one continuous coaxial device can have a squared or rectangular cross section having a cross section of between 3 and 50 mm² and the encapsulation thickness is between 0.1 and 0.5 mm.

The continuous coaxial device in this embodiment provides a heat storage capacity in the form of stored energy of at least 100 J/g and is capable of dissipating 90% of the stored energy within about 90 seconds. These values are required by the application which is a new concept in the industry. For example, when the engine of a car is started in cold conditions, viscosity of the fluids needs to be as low as possible in order to be "pumped" without much energy into the engine or transmission. Therefore, it is imporant that the heat stored in the cable should be transmitted to the fluid as quickly as possible; an automobile without the device of the present invention would need 15 minutes to heat up the fluids to an accepatble level, while with the present invention, only 90 seconds is needed.

Those skilled in the art would recognize the at least one continuous coaxial device 18 could further include a core consisting of a yarn, strand, filament or wire made of a natural or synthetic polymeric material or a metal embedded in the PCM without deviating from the basic concept of the invention. The embedding of the yarn or strand with the PCM would allow the possibility to manufacture the continuous coaxial device using an extrusion process designed for production of electrical wires or cables as described in US Serial No. 15/307,140 (E I Du Pont De Nemours And Company, USA).

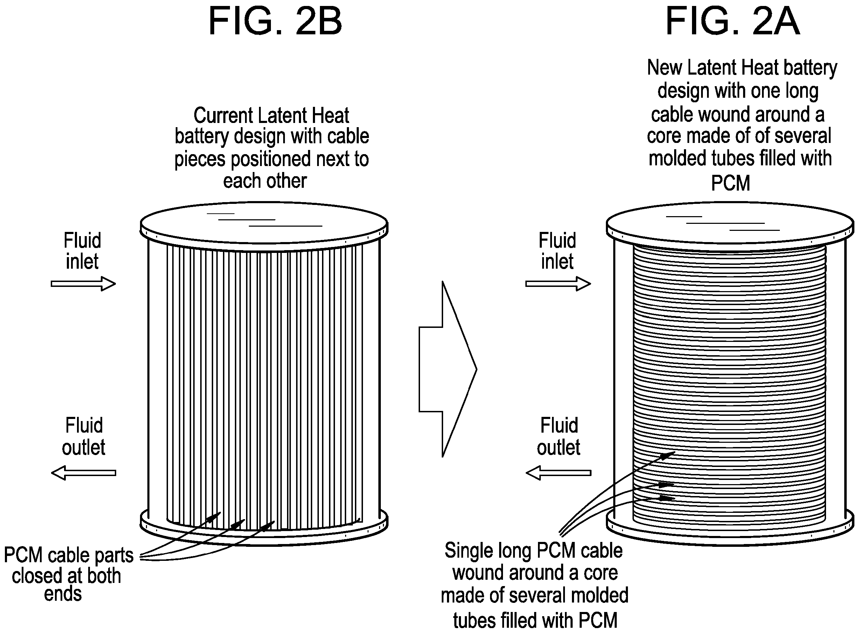

The heat storage device can be used in a latent heat battery in various industries including but not limited to automotive industry. FIG 2A illustrates a latent heat battery having "one continuous cable" as the coaxial device surrounding the body (not shown) with the encapsulated PCM. In contrast FIG 2B illustrates the "existing" latent heat battery design having multiple "cable" parts requiring closure at both ends increasing manufacturing time, costs, being less efficient in regard to heat storage capacity (higher weight of closings vs. content of PCM in the system) and being less reliable in regard to risk of leakage (the higher the number of closings, the higher the risk of leakage and therefore the higher the risk of liability).

In another emobodiment, the invention is directed to a method of making a heat storage capacity device including the steps of preparing at least one body comprising an encapsulation made of one or more polymer layers defining a hollowed volume filled with PCM and at least one continuous coaxial device comprising an encapsulation made of one or more polymer layers defining a hollowed section filled with PCM, and wrapping the entire length of the at least one body with at least one continuous coaxial device.

The continuous coaxial device wrapping the entire length of the at least one body is limited to a first end continuous with a second end. The inner encapsulation layer is made of a blend of ionomer and polyamide and the outer encapsulation layer is made of perfluoro ethylene-propylene.

The method produces a mean to store heat in the form of stored energy of 190 J/g and is capable of dissipating 90 % of the stored energy within about 90 seconds. The heat storage capicity device of the present method can be in used in the thermal management industry.

In another embodiment, the invention is directed to a latent heat battery composed of the heat storage capacity device of the present invention and a casing configured to accept and discharge fluid as illustrated in FIG. 2A. Most commonly, the continuous coaxial device will be limited to a first end and a second end having a length of 90.0 to 100.0 meters. However, those skilled in the art will recognizine the continuous coaxial device can have multiple segments, each segment having a first end and second end wherein each segment has a length of 10.0 to 20.0 meters. Depending on the design of the latent heat battery (influenced by the space available in the car), the car manufacturer may decide to have up to 20 segments (of cable or sheets); this number is much less than the existing amount in the design presently available.

The PCM composition may additionally comprise from 0.01 to 15, 0.01 to 10, or 0.01 to 5, weight percent, based on the total weight of the PCM composition, of additives including plasticizers, stabilizers including viscosity stabilizers and hydrolytic stabilizers, primary and secondary antioxidants, ultraviolet ray absorbers, anti-static agents, dyes, pigments or other coloring agents, inorganic fillers, fire- retardants, lubricants, reinforcing agents such as glass fiber and flakes, synthetic (for example, aramid) fiber or pulp, foaming or blowing agents, processing aids, slip additives, antiblock agents such as silica or talc, release agents, tackifying resins, or combinations of two or more thereof. These additives are described in the Kirk Othmer Encyclopedia of Chemical Technology. The additives may be incorporated into the composition by any known process such as by dry blending, extruding a mixture of the various constituents, the conventional masterbatch technique, or the like.

The cable of the present invention can provide a heat storage capacity in the form of stored energy of at least 100 J/g and which is capable of dissipating 90 % of the stored energy within 90 seconds. The cable can maintain a heat storage capacity of 100 to 300 J/g after 18,000 thermal aging cycles. The protective layer of the cable degrades less than 50 % after 18,000 thermal aging cycles as measured by tensile strength.

The device of the present invention can be used in several applications where thermal management is needed. While temperature management in automotive applications is one of the most relevant applications (for example for latent heat batteries, thermal management of electrical batteries, ceiling and seats of vehicles), the PCM composition of the present invention may also be used for buildings; air filters in air ducts; air conditioners; transportation applications; food packaging (to keep food chilled or warm); medical packaging (for example organ or vaccine transportation); woven and nonwoven fabrics for garments, clothes and sport wear; footwear; tree wraps, hand grips (in tools, sporting goods and vehicles); bedding; carpets; wood composites; electric cables and plastic tubes for hot media including water.

A particularly preferred application is in latent heat batteries of cars where energy is stored in the cables of the present invention while the engine is in operation and where the cables are able to release the energy stored when necessary (for instance for start-up in cold environment or cold season). This energy release allows to reduce viscosity of lubricating oils and cooling fluids and ultimately leads to lower fuel consumption and reduced CO² emission.
In a particular embodiment the invention is directed to method to effect the temperature of a lubricating oil or cooling fluid within a mechanical device during ignition. The method includes the steps of attaching the cable of the present invention to a latent heat accumulator device in communication with a mechanical device. The mechanical device will provide a source of lubricating oil or cooling fluid. The lubricating oil or cooling fluid flows from the source of lubricant lubricating oil or cooling fluid via the latent heat accumulator to the mechanical device during ignition. The cable discharges heat/energy reducing the viscosity of the lubricating oil or cooling fluid and the energy needed to pump the lubricating oil or cooling fluid within the mechanical device during ignition.

## Claims

1. A heat storage capacity device (10) comprising:
a. at least one body (12) comprising an encapsulation (14) made of one or more polymer layers defining a hollowed volume filled with PCM (16) and
b. at least one continuous coaxial device (18) surrounding the entire length of the at least one PCM filled body, **characterized in that** the at least one continuous coaxial device is made of one or more polymer encapsulation layers made of polyamide, a blend of ionomer and polyamide, ethylene acrylate rubber, polyethylene, ethylene copolymers, polypropylene, polyester, all fluorinated polymers including perfluoro ethylene-propylene, perfluoroalkoxy alkane, ethylene tetrafluoroethylene, FKM fluoroelastomers as defined in ASTM D1418 (01.01.2017), Polyvinylidene fluoride, and combinations of two or more thereof, defining the hollowed area filled with PCM, wherein the at least one continuous coaxial device is in the form a cable and wherein the cable has a diameter between 2 and 8 mm and a total encapsulation thickness between 0.1 and 0.5 mm.

2. The heat storage capacity device of claim 1, wherein the at least one body (12) is made of one or more polymer encapsulation layers made of polyamide, a blend of ionomer and polyamide, ethylene acrylate rubber, polyethylene, ethylene copolymers, polypropylene, polyester, all fluorinated polymers including perfluoro ethylene-propylene, perfluoroalkoxy alkane, ethylene tetrafluoroethylene, FKM fluoroelastomers as defined in ASTM D1418, Polyvinylidene fluoride, aluminum, and combinations of two or more thereof, defining the hollowed volume filled with PCM.

3. The heat storage capacity device of claim 1, wherein the at least one continuous coaxial device (18) consists of a first end continuous with a second end.

4. The heat capacity storage device of claim 1, wherein the at least one continuous coaxial device (18) has a squared or rectangular cross section having a cross section of between 3 and 50 mm² and the encapsulation thickness is between 0.1 and 0.5 mm.

5. The heat storage capacity device of any of the previous claims, wherein the at least one continuous coaxial device provides a heat storage capacity in the form of stored energy of at least 100 J/g and is capable of dissipating 90 % of the stored energy within about 90 seconds.

6. The heat storage capacity device of any of the previous claims wherein the at least one continuous coaxial device further comprises a core consisting of a yarn, strand or wire made of a natural or synthetic polymeric material or a metal embedded in the PCM.

7. A Latent Heat Battery comprising the heat storage capacity device of any of the previous claims.

8. A method of making a heat storage capacity device (10) comprising the steps of:
a. preparing at least one body (12) made of one encapsulation layer (14) defining a hollowed section filled with PCM (16);
b. preparing at least one continuous coaxial device (18) made of an inner and outer polymer encapsulation layer defining a hollowed section filled with PCM (16); and
wrapping the entire length of the at least one body filled with PCM with at least one continuous coaxial device (18) also filled with PCM, wherein the at least one continuous coaxial device is made of one or more polymer encapsulation layers made of polyamide, a blend of ionomer and polyamide, ethylene acrylate rubber, polyethylene, ethylene copolymers, polypropylene, polyester, all fluorinated polymers including perfluoro ethylene-propylene, perfluoroalkoxy alkane, ethylene tetrafluoroethylene, FKM fluoroelastomers as defined in ASTM D1418, Polyvinylidene fluoride, and combinations of two or more thereof, defining the hollowed area filled with PCM, wherein the at least one continuous coaxial device is in the form a cable and wherein the cable has a diameter between 2 and 8 mm and a total encapsulation thickness between 0.1 and 0.5 mm.

9. The method of claim 8, wherein the at least one continuous coaxial device wrapping the entire length of at least one body consists of a first end continuous with a second end, or wherein the encapsulation layer of the at least one body is made of a blend of ionomer and polyamide, or wherein the inner encapsulation layer of the at least one continuous coaxial device is made of a blend of ionomer and polyamide and the outer encapsulation layer is made of perfluoro ethylene-propylene.

10. The method of claim 8 or 9, wherein the at least one continuous coaxial device provides a heat storage capacity in the form of stored energy of 190 J/g and is capable of dissipating 90 % of the stored energy within about 90 seconds.

11. The use of the heat storage capacity deviceof any of the claims 1 to 6 in thermal management, or in the automotive industry.

12. A Latent Heat Battery consisting of the heat storage capacity device of any of the claims 1 to 6 and a casing configured to accept and discharge fluid.

13. The latent heat battery of claim 12, wherein the at least one continuous coaxial device consists of a first end and a second end and has a length of 90.0 to 300.0 meters, or wherein the at least one continuous coaxial device comprises multiple segments each segment having a first end and second end.

14. The latent heat battery of claim 13, wherein each segment has a length of 10.0 to 20.0 meters.

## Patentansprüche

1. Wärmespeicherkapazitätsvorrichtung (10), umfassend:
a. wenigstens einen Körper (12), der eine Einkapselung (14) aus einer oder mehreren Polymerschichten, welche ein mit PCM (16) gefülltes Hohlvolumen definieren, umfasst, und
b. wenigstens eine durchgehende koaxiale Vorrichtung (18), die die gesamte Länge des wenigstens einen PCM-gefüllten Körpers umgibt,
**dadurch gekennzeichnet, dass** die wenigstens eine durchgehende koaxiale Vorrichtung aus einer oder mehreren Einkapselungspolymerschichten aus Polyamid, einer Mischung aus lonomer und Polyamid, Ethylenacrylatkautschuk, Polyethylen, Ethylencopolymeren, Polypropylen, Polyester, vollständig fluorierten Polymeren einschließlich Perfluorethylenpropylen, Perfluoralkoxyalkan, Ethylentetrafluorethylen, FKM-Fluorelastomeren wie in ASTM D1418 (01.01.2017) definiert, Polyvinylidenfluorid und Kombinationen aus zwei oder mehr davon hergestellt ist, die den mit PCM gefüllten Hohlbereich definieren, wobei die wenigstens eine durchgehende koaxiale Vorrichtung in Form eines Kabels vorliegt, und wobei das Kabel einen Durchmesser zwischen 2 und 8 mm und eine Gesamteinkapselungsdicke zwischen 0,1 und 0,5 mm besitzt.

2. Wärmespeicherkapazitätsvorrichtung nach Anspruch 1, wobei der wenigstens eine Körper (12) aus einer oder mehreren Einkapselungspolymerschichten aus Polyamid, einer Mischung aus lonomer und Polyamid, Ethylenacrylatkautschuk, Polyethylen, Ethylencopolymeren, Polypropylen, Polyester, vollständig fluorierten Polymeren einschließlich Perfluorethylenpropylen, Perfluoralkoxyalkan, Ethylentetrafluorethylen, FKM-Fluorelastomeren wie in ASTM D1418 definiert, Polyvinylidenfluorid, Aluminium und Kombinationen aus zwei oder mehr davon hergestellt ist, die das mit PCM gefüllte Hohlvolumen definieren.

3. Wärmespeicherkapazitätsvorrichtung nach Anspruch 1, wobei die wenigstens eine durchgehende koaxiale Vorrichtung (18) aus einem ersten Ende, das mit einem zweiten Ende verbunden ist, besteht.

4. Wärmespeicherkapazitätsvorrichtung nach Anspruch 1, wobei die wenigstens eine durchgehende koaxiale Vorrichtung (18) einen quadratischen oder rechteckigen Querschnitt mit einem Querschnitt zwischen 3 und 50 mm² besitzt und die Einkapselungsdicke zwischen 0,1 und 0,5 mm beträgt.

5. Wärmespeicherkapazitätsvorrichtung nach einem der vorhergehenden Ansprüche, wobei die wenigstens eine durchgehende koaxiale Vorrichtung eine Wärmespeicherkapazität in Form von gespeicherter Energie von wenigstens 100 J/g bereitstellt und in der Lage ist, 90% der gespeicherten Energie innerhalb etwa 90 Sekunden abzuführen.

6. Wärmespeicherkapazitätsvorrichtung nach einem der vorhergehenden Ansprüche, wobei die wenigstens eine durchgehende koaxiale Vorrichtung ferner einen Kern umfasst, der aus einem Garn, Strang oder Draht aus natürlichem oder synthetischem Polymermaterial oder einem Metall besteht, eingebettet im PCM.

7. Latentwärmespeicher, umfassend die Wärmespeicherkapazitätsvorrichtung nach einem der vorhergehenden Ansprüche.

8. Verfahren zur Herstellung einer Wärmespeicherkapazitätsvorrichtung (10), umfassend die folgenden Schritte:
a. Herstellen wenigstens eines Körpers (12) aus einer Einkapselungsschicht (14), die einen mit PCM (16) gefüllten Hohlbereich definiert;
b. Herstellen wenigstens einer durchgehenden koaxialen Vorrichtung (18) aus einer inneren und einer äußeren Einkapselungspolymerschicht, die einen mit PCM (16) gefüllten Hohlbereich definieren; und
Umwickeln der gesamten Länge des wenigstens einen mit PCM gefüllten Körpers mit wenigstens einer durchgehenden koaxialen Vorrichtung (18), die ebenfalls mit PCM gefüllt ist, wobei die wenigstens eine durchgehende koaxiale Vorrichtung aus einer oder mehreren Einkapselungspolymerschichten aus Polyamid, einer Mischung aus lonomer und Polyamid, Ethylenacrylatkautschuk, Polyethylen, Ethylencopolymeren, Polypropylen, Polyester, vollständig fluorierten Polymeren einschließlich Perfluorethylenpropylen, Perfluoralkoxyalkan, Ethylentetrafluorethylen, FKM-Fluorelastomeren wie in ASTM D1418 definiert, Polyvinylidenfluorid und Kombinationen aus zwei oder mehr davon hergestellt ist, die den mit PCM gefüllten Hohlbereich definieren, wobei die wenigstens eine durchgehende koaxiale Vorrichtung in Form eines Kabels vorliegt, und wobei das Kabel einen Durchmesser zwischen 2 und 8 mm und eine Gesamteinkapselungsdicke zwischen 0,1 und 0,5 mm besitzt.

9. Verfahren nach Anspruch 8, wobei die wenigstens eine durchgehende koaxiale Vorrichtung, die um die gesamte Länge des wenigstens einen Körpers gewickelt ist, aus einem ersten Ende, das mit einem zweiten Ende verbunden ist, besteht, oder wobei die Einkapselungsschicht des wenigstens einen Körpers aus einer Mischung aus lonomer und Polyamid hergestellt ist, oder wobei die innere Einkapselungsschicht der wenigstens einen durchgehenden koaxialen Vorrichtung aus einer Mischung aus lonomer und Polyamid hergestellt ist und die äußere Einkapselungsschicht aus Perfluorethylenpropylen hergestellt ist.

10. Verfahren nach Anspruch 8 oder 9, wobei die wenigstens eine durchgehende koaxiale Vorrichtung eine Wärmespeicherkapazität in Form von gespeicherter Energie von 190 J/g bereitstellt und in der Lage ist, 90% der gespeicherten Energie innerhalb etwa 90 Sekunden abzuführen.

11. Verwendung der Wärmespeicherkapazitätsvorrichtung nach einem der Ansprüche 1 bis 6 beim Thermomanagement oder in der Automobilindustrie.

12. Latentwärmespeicher, bestehend aus der Wärmespeicherkapazitätsvorrichtung nach einem der Ansprüche 1 bis 6 und einem Gehäuse, das konfiguriert ist, um Fluid aufzunehmen und abzugeben.

13. Latentwärmespeicher nach Anspruch 12, wobei die wenigstens eine durchgehende koaxiale Vorrichtung aus einem ersten Ende und einem zweiten Ende besteht und eine Länge von 90,0 bis 300,0 Metern besitzt, oder wobei die wenigstens eine durchgehende koaxiale Vorrichtung mehrere Segmente besitzt, wobei jedes Segment ein erstes Ende und ein zweites Ende besitzt.

14. Latentwärmespeicher nach Anspruch 13, wobei jedes Segment eine Länge von 10,0 bis 20,0 Metern besitzt.

## Revendications

1. Dispositif à capacité de stockage thermique (10) comprenant :
a. au moins un corps (12) comprenant un enrobage (14) constitué d'une ou de plusieurs couches de polymères qui définissent un volume évidé rempli avec un matériau à changement de phase (MCP) (16) et
b. au moins un dispositif continu coaxial (18) qui entoure l'entière longueur de l'au moins un corps rempli avec un MCP, **caractérisé en ce que** l'au moins un dispositif continu coaxial est constitué d'une ou de plusieurs couches de polymères d'enrobage composées d'un polyamide, d'un mélange d'un ionomère et d'un polyamide, d'un caoutchouc éthylène-acrylate, d'un polyéthylène, de copolymères éthyléniques, d'un polypropylène, d'un polyester, de tous les polymères fluorés, y compris d'un éthylène-co-propylène perfluoré, d'un alkoxyalcane perfluoré, d'un poly(éthylène-co-tétrafluoroéthylène), de fluoroélastomères FKM tels que définis dans la norme ASTM D1418 (01.01.2017), d'un poly(fluorure de vinylidène) et de combinaisons de deux ou plusieurs de ceux-ci, définissant la zone évidée remplie avec un MCP, où l'au moins un dispositif continu coaxial est sous la forme d'un câble et où le câble a un diamètre entre 2 et 8 mm et une épaisseur d'enrobage totale entre 0,1 et 0,5 mm.

2. Dispositif à capacité de stockage thermique de la revendication 1, où l'au moins un corps (12) est constitué d'une ou de plusieurs couches de polymères d'enrobage composées d'un polyamide, d'un mélange d'un ionomère et d'un polyamide, d'un caoutchouc éthylène-acrylate, d'un polyéthylène, de copolymères éthyléniques, d'un polypropylène, d'un polyester, de tous les polymères fluorés, y compris d'un éthylène-co-propylène perfluoré, d'un alkoxyalcane perfluoré, d'un poly(éthylène-co-tétrafluoroéthylène), de fluoroélastomères FKM tels que définis dans la norme ASTM D1418, d'un poly(fluorure de vinylidène), d'aluminium et de combinaisons de deux ou plusieurs de ceux-ci, définissant le volume évidé remplie avec un MCP.

3. Dispositif à capacité de stockage thermique de la revendication 1, où l'au moins un dispositif continu coaxial (18) consiste en une première extrémité en continuité avec une seconde extrémité.

4. Dispositif à capacité de stockage thermique de la revendication 1, où l'au moins un dispositif continu coaxial (18) présente une section transversale carrée ou rectangulaire ayant une section transversale entre 3 et 50 mm² et une épaisseur d'enrobage entre 0,1 et 0,5 mm.

5. Dispositif à capacité de stockage thermique de l'une quelconque des revendications précédentes, où l'au moins un dispositif continu coaxial fournit une capacité de stockage thermique sous la forme d'énergie stockée d'au moins 100 J/g et est capable de dissiper 90 % de l'énergie stockée en l'espace de 90 secondes environ.

6. Dispositif à capacité de stockage thermique de l'une quelconque des revendications précédentes, où l'au moins un dispositif continu coaxial comprend en outre un coeur consistant en une ficelle, un brin ou un fil constitué d'un matériau polymère naturel ou synthétique ou d'un métal encastré dans le MCP.

7. Accumulateur de chaleur latente comprenant le dispositif à capacité de stockage thermique de l'une quelconque des revendications précédentes.

8. Méthode de fabrication d'un dispositif à capacité de stockage thermique (10) comprenant les étapes qui consistent à :
a. préparer au moins un corps (12) constitué d'une couche d'enrobage (14) qui définit une partie évidée remplie avec un MCP (16) ;
b. préparer au moins un dispositif continu coaxial (18) constitué d'une couche d'un polymère d'enrobage interne et externe qui définit une partie évidée remplie avec un MCP (16) ; et
envelopper l'entière longueur de l'au moins un corps rempli avec un MCP avec au moins un dispositif continu coaxial (18) également rempli avec un MCP, où l'au moins un dispositif continu coaxial est constitué d'une ou de plusieurs couches de polymères d'enrobage composées d'un polyamide, d'un mélange d'un ionomère et d'un polyamide, d'un caoutchouc éthylène-acrylate, d'un polyéthylène, de copolymères éthyléniques, d'un polypropylène, d'un polyester, de tous les polymères fluorés, y compris d'un éthylène-co-propylène perfluoré, d'un alkoxyalcane perfluoré, d'un poly(éthylène-co-tétrafluoroéthylène), de fluoroélastomères FKM tels que définis dans la norme ASTM D1418, d'un poly(fluorure de vinylidène) et de combinaisons de deux ou plusieurs de ceux-ci, définissant la zone évidée remplie avec un MCP, où l'au moins un dispositif continu coaxial est sous la forme d'un câble et où le câble a un diamètre entre 2 et 8 mm et une épaisseur d'enrobage totale entre 0,1 et 0,5 mm.

9. Méthode de la revendication 8, où l'au moins un dispositif continu coaxial enveloppant l'entière longueur de l'au moins un corps consiste en une première extrémité en continuité avec une seconde extrémité, ou où la couche d'enrobage de l'au moins un corps est composée d'un mélange d'un ionomère et d'un polyamide, ou où la couche d'enrobage interne de l'au moins un dispositif continu coaxial est composée d'un mélange d'un ionomère et d'un polyamide et la couche d'enrobage externe est composée d'un éthylène-co-propylène perfluoré,

10. Méthode de la revendication 8 ou 9, où l'au moins un dispositif continu coaxial fournit une capacité de stockage thermique sous la forme d'énergie stockée de 190 J/g et est capable de dissiper 90 % de l'énergie stockée en l'espace de 90 secondes environ.

11. Utilisation du dispositif à capacité de stockage thermique de l'une quelconque des revendications 1 à 6 dans la gestion thermique ou dans l'industrie automobile.

12. Accumulateur de chaleur latente consistant en le dispositif à capacité de stockage thermique de l'une quelconque des revendications 1 à 6 et en un boîtier configuré pour recevoir et décharger un fluide.

13. Accumulateur de chaleur latente de la revendication 12, où l'au moins un dispositif continu coaxial consiste en une première extrémité et une seconde extrémité et a une longueur qui va de 90,0 à 300,0 mètres, ou où l'au moins un dispositif continu coaxial comprend de multiples segments, chaque segment ayant une première extrémité et une seconde extrémité.

14. Accumulateur de chaleur latente de la revendication 13, où chaque segment a une longueur qui va de 10,0 à 20,0 mètres.
